# EUROPEAN PATENT APPLICATION

(11) **EP 3 046 387 A1**
(43) Date of publication of application: **20.07.2016**
(21) Application number: 15305051.3
(22) Date of filing: 19.01.2015
(51) Int. Cl.: H04W 72/08, H04W 24/02

(54) **Access point device, apparatus for managing an access point device, wireless communication device, and corresponding method and computer program product**

(71) Applicant: ALCATEL LUCENT, 92100 Boulogne-Billancourt (FR)
(72) Inventor: Gacanin, Haris, 2018 Antwerpen (BE)
(74) Representative: Lubberdink, Pim

(57) **Abstract**

Embodiments of the invention relate to an access point device, an apparatus for managing an access point device, a wireless communication device, and a corresponding method and a corresponding computer program product. The access point device comprises:
- a transmitter arranged to transmit to at least one wireless device connected to the access point via a first network a request for information on at least one other network detectable by the at least one wireless device and corresponding to an other access point, the information comprising:
o an identifier of the other network; and
o an operating channel of the other network,

- a receiver arranged to receive from the at least one wireless device the information sent in response to the request,

wherein the access point device is arranged to select an operating channel of the first network on the basis of the received information.

## Description

### Field of the invention

The invention relates to an access point device. An access point device, also referred to as "access point" or "AP", allows wireless communication devices to connect to a network. For example, an access point device may provide a wireless local network (WLAN) to connect wireless device to the internet. In another example, an access point serves as a femtocell for providing locally a mobile communications network, e.g. a 3G or 4G network, for wireless devices such as mobile phones.

### Background

Wireless communication networks may suffer from interference. This is especially true for the crowded 2.4 GHz frequency band, used for e.g. WiFi, Bluetooth and Zigbee. As the number of wireless applications has been steadily increasing, so has the problem of interference. Likewise, also mobile communications networks may suffer from interference.

One way of reducing interference with other networks is to select a different operating channel, i.e. a frequency sub-band, than said other networks. For example, the IEEE 802.11 standard defines 14 operating channels in the 2.4 GHz frequency band, each channel spanning 22 MHz. In the 802.11 standard the operating channels are spaced 5 MHz apart, with the exception of a 12 MHz separation between channel 13 and 14. When the ranges of two APs overlap, interference may be prevented by selecting a different operating channels for each AP, e.g. channel 1 for the first AP and channel 6 for the second AP.

However, APs having overlapping ranges may not be aware of each other. For example, two APs may be outside each other's range and therefore may not be able to detect each other. However, their ranges may still overlap, such that a wireless device located within the range of both APs may encounter interference problems when the APs operate in the same channel.

When the operating channels of the APs are known, such situations may be remedied by manually setting different operating channels for overlapping ranges. However, manually setting operating channels is labour intensive and time consuming. Vendor specific solutions exists wherein the operating channels of several APs are managed centrally, e.g. via a centralized server. Although such a central solution may reduce interference between APs of the same vendor, it cannot take into account interference with APs of other vendors. In particular, the operating channels of said other vendor's APs are unknown to the system.

### Summary

An object of embodiments of the invention is to reduce interference in wireless communication with access points (APs).

According to a first embodiment of the present invention, there is provided an access point device comprising a transmitter and a receiver. The transmitter is arranged to transmit a request to at least one wireless device connected to the access point via a first network. The request is a request for information on at least one other network detectable by the at least one wireless device, said at least one other network corresponding to an other access point. The requested information comprises an identifier of the other network and an operating channel of the other network. The receiver of the access point device is arranged to receive said information from the at least one wireless device, said information being sent in response to the request. The access point device is arranged to select an operating channel of the first network on the basis of the received information.

In other words, the access point device uses the wireless devices connected to it to obtain information on the operating channel of networks provided by other access points visible to the wireless devices. This has the advantage that the access point can also collect information about other access points which are outside its range or otherwise not detectable by the access point itself. Moreover, the collection of information is independent on vendor specific parameters, as no direct communication between the access points is necessary to obtain the information. Therefore, the operating channels of possibly interfering networks can be determined reliably.

For example, the access point device may be arranged to select a channel which is not used by any other network. If the information indicates that no free channel is available, the access point device may select a channel which is used by the smallest number of other networks.

The first network and the at least one other network are preferably wireless networks, e.g. a Wi-Fi network or a mobile communications network, such as a 3G or 4G network. The access point device may for example be a Wi-Fi access point or a mobile communications femtocell.

For example, the at least one wireless device may be a cellular phone, a smartphone, a tablet computer, a laptop or a desktop computer.

For example, in the case of a Wi-Fi network, the identifier may comprise a service set identification (SSID). In another example, in a 3G or 4G mobile communications network the identifier may comprise a cell ID. For example, said identifier may be obtained according to the Femto Access Point (FAP) Service Data Model as FAPService.{i}.CellConfig.UMTS.RAN.CellID for a 3G femtocell and as FAPService.{i}.CellConfig.LTE.RAN.RF.PhyCellID for a 4G femtocell.

The access point device may periodically send a request to the connected device to keep the information - and thereby the selected operating channel - up to date. For example, the access point device may send a request every minute, every hour, every day or every week.

In an embodiment, the information further comprises a measured signal strength of the other network.

By receiving the measured signal strength of the one or more other networks from the at least one wireless device, the access point is able to take the signal strength into account when selecting the operating channel.

For example, the measured signal strength may be related to the power received by the wireless device, e.g. the power within a certain operating channel. For example, an Received Signal Strength Indication (RSSI) or Received Channel Power Indicator (RCPI) is obtained. In another example, the RSSI may be obtained according to the Femto Access Point (FAP) Service Data Model as FAPService.{i}.REM.UMTS.WCDMA.Cell.{i}.RF.RSSI for a 3G femtocell and as FAPService.{i}.REM.LTE.Cell{i}.RF.RSSI for a 4G femtocell.

Optionally, the wireless device may further measure the signal strength of the first network and send it to the access point device.

In a further embodiment, the access point device further comprises a processor. The processor is arranged to calculate for each operating channel the sum of the measured signal strengths of the one or more other networks operating in said channel. The processor is further arranged to select the operating channel of the first network as the channel corresponding to the lowest sum calculated by the processor.

The information collected via the wireless devices indicates for each detected network an operating channel and a corresponding signal strength. Multiple networks may operate on the same channel.

The processor sums the signal strength on a per channel basis. Therefore, a channel used by many networks will generally have a large sum. The processor selects the channels corresponding to the lowest sum. Note that the sum may also be equal to zero if no networks are active in a given channel.

Possibly, two or more channels may result in the same sum. In that case, either of those channels may be selected as the operating channel of the access point device. In one example, if two or more channels have the same lowest sum, the processor adds the previously calculated signal strength sums of channels neighbouring said channels having the same lowest sum, and selects the channel corresponding to the lowest value of this newly calculated sum.

In a further embodiment, the access point device is arranged to receive the information from at least two wireless devices. The processor is further arranged to only take the measurement corresponding to the largest measured signal strength into account for calculating said sum if different signal strengths are received from the at least two wireless devices for the same other network.

For example, if the access point device receives two measurements, e.g. RSSI-1 and RSSI-2, for network A having operating channel *n*, the processor calculates the sum for channel *n* by ignoring the lowest value of RSSI-1 and RSSI-2.

By using the maximum measured signal strength for each channel, the processor selects the operating channel of the access point on the basis of a worst case scenario. Therefore, interference is reduced reliably.

Alternative to using a maximum measured signal strength, another statistic may be used if multiple measurements are received. For example, the mean, mode or median of the signal strengths measured for the same network are used.

In a further embodiment, the processor is arranged to only take into account measurements having a measured signal strength above a predetermined threshold.

In a second embodiment according to the invention, the access point device is arranged to transmit the received information to a remote server in response to receiving the information from the at least one wireless device, e.g. using the transmitter. The access point device is further arranged to receive an operating channel setting from the remote server in response to the transmitting of the information to the remote server, e.g. using the receiver. The access point device is further arranged to select the operating channel of the first network according to the received operating channel setting.

In other words, the access point device communicates the information collected from the wireless devices to a remote server. The remote server determines the operating channel on the basis of the collected information and sends a corresponding message to the access point device. Upon receiving said message, the access point device selects the operating channel in accordance with the operating channel selected by the server.

The remote server may be connected to one or more access point device via a wired or wireless connection.

In a further embodiment, the access point device is further arranged to receive an initialization command from the remote server, and to send the request to the at least one wireless device in response to the initialization command.

In other words, the server initiates the collection of the information by the wireless device by sending a message, i.e. the initialization command, to the access point. Upon receipt of the initialization command the access point sends the request to information to one or more wireless devices connected to it. The resulting information is subsequently communicated to the remote server.

Further embodiments of the invention relate to an apparatus for managing at least one access point device.

In an embodiment, at least one wireless device is connected to the at least one access point device via a first network. The managing apparatus comprises a receiver, a processor and a transmitter. The receives is arranged to receive from the at least one access point device information on at least one other network corresponding to an other access point device. Said information comprises an identifier of the other network and an operating channel of the other network. The processor of the apparatus is arranged to select an operating channel setting for the first network on the basis of the received information. The transmitter of the apparatus is arranged to transmit the selected operating channel setting to the at least one access point device.

For example, the apparatus for managing at least one access point device is a server. The apparatus may be connected to the at least one access point device via a wired or wireless network. For example, the apparatus is connected to the at least one access point device via the internet.

In particular, the apparatus may cooperate with an access point device according to the second embodiment described above.

In a further embodiment, the information comprises a measured signal strength of the at least one other network. The processor is further arranged to calculate for each operating channel the sum of the measured signal strengths of the one or more other networks operating in said channel. The processor is also arranged to select the operating channel setting for the first network as the channel corresponding to the lowest sum calculated by the processor.

Further embodiments of the invention relate to a wireless communication device.

In an embodiment, the wireless communication device comprises a receiver, a network scanner and a transmitter. The receiver is arranged to receive from a first access point to which the device is connected via a first network a request for information on at least one other network of an other access point. Said information comprises an identifier of the other network and an operating channel of the other network. The network scanner is arranged to detect the at least one other network and to collect the requested information of the at least one other detected network. The transmitter is arranged to transmit the collected information.

The network scanner may periodically collect the information on other networks and/or may collect the information on other networks upon receiving the request from the access point. The transmitter of the wireless device is preferably arranged to transmit the collected information to the corresponding access point only in response to the request for said information.

For example, the at least one wireless device may be a cellular phone, a smartphone, a tablet computer, a laptop or a desktop computer.

In an embodiment, the information collected by the network scanner further comprises a measured signal strength of the other network.

Further embodiments of the invention relate to a method for selecting an operating channel of a first network of a first access point.

In an embodiment the method comprises the step of transmitting to at least one wireless device connected to the first network via the first access point a request for information on at least one other network detectable by the at least one wireless device, said other network corresponding to an other access point. Said information comprises an identifier of the other network and an operating channel of the other network. The method further comprises the step of receiving from the at least one wireless device the information sent in response to the request. The method further comprises the step of automatically selecting the operating channel of the first network of the first access point on the basis of the received information on the at least one other network.

The method may for example be performed by an access point device or an apparatus for managing at least one access point device.

In an embodiment, the information further comprises a measured signal strength of the other network. The method further comprises calculating for each operating channel the sum of the measured signal strengths of the one or more other networks operating in said channel. The method further comprises automatically selecting the operating channel of the first network as the channel corresponding to the lowest calculated sum.

In a further embodiment, the information is collected from at least two wireless devices. If different signal strengths are collected for the same other network, only the measurement corresponding to the largest measured signal strength is taken into account for calculating said sum.

A further embodiment of the invention relates to a computer program product.

In an embodiment the computer program product comprises non-transitory computer-executable instructions configured to, when executed, perform the method as described above.

The same advantages and effects as described above with respect to the access point device apply to the apparatus for managing at least one access point device, the wireless communication device, the method for selecting an operating channel and the computer program product.

### Brief description of the figures

The accompanying drawings are used to illustrate presently preferred non-limiting exemplary embodiments of the present invention. The above and other advantages of the features and objects of the invention will become more apparent and the invention will be better understood from the following detailed description when read in conjunction with the accompanying drawings, in which:
- figure 1 shows schematically a number of access point devices, a managing apparatus and a number of wireless devices according to an embodiment of the present invention;
- figure 2 shows a table of measured signal strength per channel for each detected network; and
- figure 3 shows a block diagram of an embodiment of the method of the present invention.

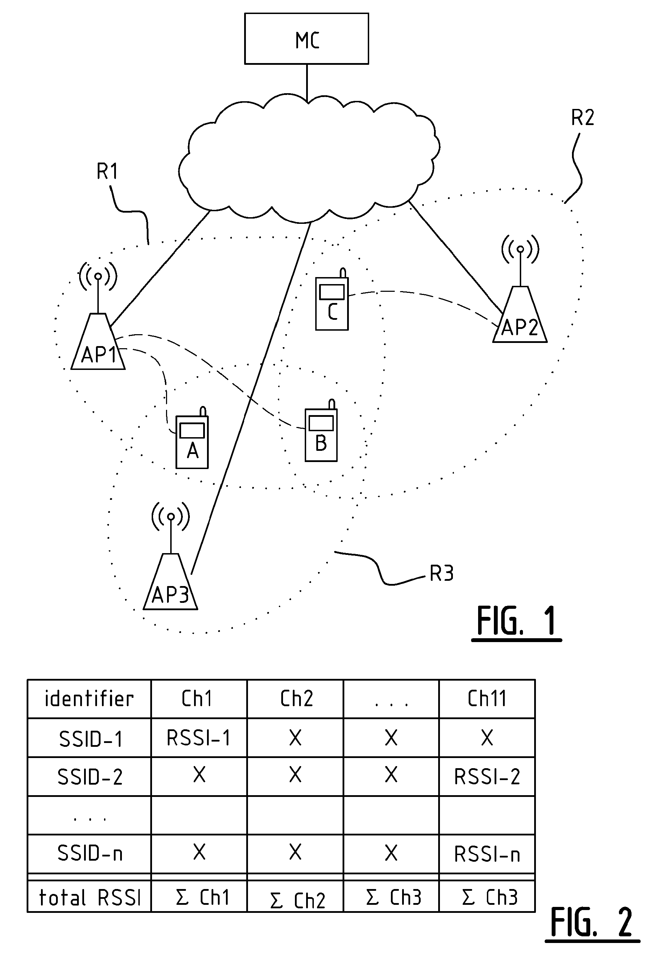

A number of access points AP1, AP2, AP3 provide a wireless network to a number of wireless devices A, B, C (figure 1). In the example shown, the wireless devices A, B, C are smartphones and AP1, AP2, AP3 provide a Wi-Fi network to the respective devices. However, AP1, AP2, AP3 may alternatively comprise a femtocell and provide a mobile communication network to said wireless devices. The wireless devices may alternatively comprise cellular phones, tablet computers, laptop or desktop computers. In the example shown, AP1, AP2, AP3 each provide a single wireless network.

In the example shown the access points AP1, AP2, AP3 each have a corresponding range R1, R2, R3, as illustrated with dotted lines. AP1 and AP2 are of the same vendor, whereas AP3 is of a different vendor. AP1 and AP2 are connected to management center MC via internet, illustrated as a cloud in the figure. The MC comprises an apparatus for managing AP1 and AP2. AP3 is not connected to the MC, and the settings of this other vendor's AP cannot be controlled from the MC.

Device A, B, C are all in range of more than one AP. For example, device C is in range R1 of AP1 and in range R2 of AP2. In the example shown, device A is connected to AP1, device B is also connected to AP1 and device C is connected to AP2, as illustrated with the dashed lines.

In the exemplary embodiment, the MC sends an initialization command to both AP1 and AP2. Upon receiving said initialization command, AP1 and AP2 send a request to the phones connected to said AP, i.e. AP1 sends a request to device A and B and AP2 to device C. In general two or more devices will be connected to each AP. An AP may send a request to all connected devices or to a subset thereof.

Device A is connected to AP1 via a first network. Upon receipt of the request from AP1, device A collects information on other networks detectable by device A using a network scanner application.

As device A is also within range of the network of AP3, its network scanner application collects an identifier of said network. In the current example wherein the networks are Wi-Fi networks, device A collects the service set identification (SSID) as the identifier. In another example wherein the networks are mobile communications networks, the wireless devices may collect a Cell ID of the APs instead of an SSID.

The network scanner application of device A measures the signal strength of the network of AP3. In the current example, the signal strength is expressed as an RSSI. Device A further collects the operating channel of the network of AP3. After collection of the SSID, the RSSI and the operating channel of AP3, device A sends this information to AP1 as a response to the request.

Likewise, the network scanner application of device B also detects the network of AP3 and sends the corresponding SSID, RSSI and operating channel to AP1. Furthermore, the network scanner application of device B collects the SSID, RSSI and operating channel of the network of AP2. This information is also send to AP1.

Subsequently, AP1 sends the information to the management center. On the basis of the received information from AP1, the management center selects the operating channel for AP1. The management center transmits the respective operating channel setting to AP1, which sets its operating channel accordingly.

For example,_AP1 and AP2 operate at channel 1 and 11 respectively. Initially, the operating channel of AP3 is unknown to the management center, as AP3 is of a different vendor. The following information is received by AP1 of devices A and B:

| **SSID** | **RSSI** | **Operating Channel** |
|---|---|---|
| SSID-AP2 | RSSI-AP2 | 11 |
| SSID-AP3 | RSSI-AP3 | 1 |

The management center selects an operating channel not in use by either SSID-AP2 or SSID-AP3, e.g. channel 6. The MC sends the setting "channel 6" to AP1, upon receipt whereof AP1 sets the operating channel to channel 6.

For selecting a channel of a given AP, the MC may calculate the sum of RSSIs of other networks detected by devices connected to said AP, for each individual channel. In the example above, only a small number of devices and APs are present. Therefore, the sum for channel 1 will simply be RSSI-AP3, the sum for channel 11 will simply be RSSI-AP2 and the sum for the other channels will be zero. However, in general a large number of APs and wireless devices may be present.

The general case for calculating the sum of RSSIs per channel is illustrated in figure 2. For each unique SSID the RSSI value is tabulated in the column of the corresponding operating channel. In the example shown the network SSID-1 has a RSSI of RSSI-1 operating in channel 1, while the network SSID-2 has and RSSI of RSSI-2 operating in channel 11. The management center calculates the sum of each column, i.e. the sum of the RSSIs of every unique network operating in said channel. After calculating the sum, the operating channel having the lowest sum is selected as the operating channel for the corresponding AP. In the example, the table of figure 2 corresponds to the information collected by a single AP.

In the embodiments described above, the management center determines the operating channel for AP1 and AP2. Alternatively, AP1 and AP2 comprise a processor for selecting the operating channel on the basis of the information on other networks as received from connected devices.

For clarity of illustration, only a small number of mobile terminals A, B, C has been shown in figure 1. However, in general a large number of mobile terminals will be present. Furthermore, the mobile phones will move with respect to the APs, due to movement of the end users. Therefore, for any AP the set of mobile phones connected to it will change over time. Therefore, even if the distribution of the mobile terminals with respect to the APs is such that at a first time instance an AP cannot detect all possible interfering APs via the mobile terminals, said distribution will be different for a second time instance such that over time all possible interfering APs can be detected.

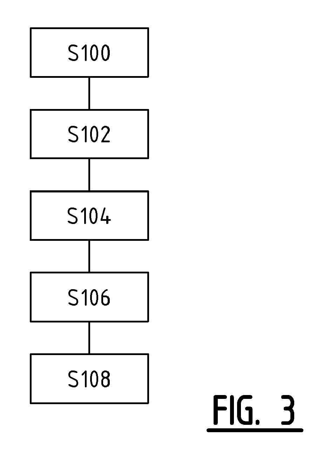

The method of an embodiment of the present invention will be explained next with respect to figure 3. In step S100 a request for information is transmitted to at least one wireless device connected to a first network via a first access point. In step S102 the information sent in response to said request is received. The information comprises an identifier of at least one other network detectable by the at least one wireless device, corresponding to an other access point. The information further comprises an operating channel of said at least one other network and a measured signal strength of said at least one other network. In step S104 a sum is calculated of the measured signal strengths in each operating channel. In step S106 the operating channel having a lowest sum is determined. In step S108 the operating channel for the first network is selected as the channel corresponding to the lowest sum calculated in step S106.

Possibly, the sums calculated in step S106 may be the same for more than one channel. In that case, either channel may be chosen. In one example, the following procedure is followed in such a case. The one or more neighbouring channels of the channels having the same lowest sum are determined. Of these neighbouring channels, the corresponding sums of the signal strength as calculated in step S 106 are added. The channel corresponding to the lowest value for this newly calculated sum is selected as the operating channel for the first network.

A person skilled in the art would readily recognize that steps of various above-described methods can be performed by programmed computers and/or electronic devices with computation capabilities. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers and/or electronic devices with computation capabilities (where hard coded or soft coded) programmed to perform said steps of the above-described methods. The functions of the various elements shown in the figures, including any functional blocks may be provided through the use of dedicated hardware as well as hardware capable of executing software in association with appropriate software. Hardware and may include, without limitation, digital signal processor (DSP) hardware, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic.

It should be appreciated by those skilled in the art that any block diagrams herein represent conceptual views of illustrative circuitry embodying the principles of the invention. Similarly, it will be appreciated that any flow charts, flow diagrams, represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. Access point device, comprising:
- a transmitter arranged to transmit to at least one wireless device connected to the access point via a first network a request for information on at least one other network detectable by the at least one wireless device and corresponding to an other access point, the information comprising:
o an identifier of the other network; and
o an operating channel of the other network,
- a receiver arranged to receive from the at least one wireless device the information sent in response to the request,
wherein the access point device is arranged to select an operating channel of the first network on the basis of the received information.

2. Access point device according to claim 1, wherein said information further comprises a measured signal strength of the other network.

3. Access point device according to claim 2, wherein the access point device further comprises a processor arranged to:
- calculate for each operating channel the sum of the measured signal strengths of the one or more other networks operating in said channel; and
- select the operating channel of the first network as the channel corresponding to the lowest sum calculated by the processor.

4. Access point device according to claim 3, wherein the access point device is arranged to receive said information from at least two wireless devices, and the processor is arranged to only take the measurement corresponding to the largest measured signal strength into account for calculating said sum if different signal strengths are received from the at least two wireless devices for the same other network.

5. Access point device according to claim 3 or 4, wherein the processor is arranged to only take into account measurements having a measured signal strength above a predetermined threshold.

6. Access point device according to claim 1 or 2, further being arranged to:
- transmit the received information to a remote server in response to receiving the information from the at least one wireless device;
- receive an operating channel setting from the remote server in response to the transmitting of the information to the remote server; and
- select the operating channel of the first network according to the received operating channel setting.

7. Access point device according to claim 6, further being arranged to receive an initialization command from the remote server, and to send the request to the at least one wireless device in response to the initialization command.

8. Apparatus for managing at least one access point device, wherein at least one wireless device is connected to the at least one access point device via a first network, the apparatus comprising:
- a receiver arranged to receive from the at least one access point device information on at least one other network corresponding to an other access point device, the information comprising
o an identifier of the other network; and
o an operating channel of the other network,
- a processor arranged to select an operating channel setting for the first network on the basis of the received information; and
- a transmitter to transmit the selected operating channel setting to the at least one access point device.

9. Apparatus according to claim 8, wherein the information comprises a measured signal strength of the other network, and the processor is arranged to:
- calculate for each operating channel the sum of the measured signal strengths of the one or more other networks operating in said channel; and
- select the operating channel setting for the first network as the channel corresponding to the lowest sum calculated by the processor.

10. Wireless communication device, comprising:
- a receiver arranged to receive from a first access point to which the device is connected via a first network a request for information on at least one other network of an other access point, the information comprising:
o an identifier of the other network; and
o an operating channel of the other network,
- a network scanner arranged to detect the at least one other network and to collect the requested information of the at least one other detected network; and
- a transmitter arranged to transmit the collected information.

11. Wireless communication device according to claim 10, wherein said information collected by the network scanner further comprises a measured signal strength of the other network.

12. Method for selecting an operating channel of a first network of a first access point, the method comprising the steps of:
- transmitting to at least one wireless device connected to the first network via the first access point a request for information on at least one other network detectable by the at least one wireless device and corresponding to an other access point, the information comprising:
o an identifier of the other network; and
o an operating channel of the other network, and
- receiving from the at least one wireless device the information sent in response to the request; and
- automatically selecting the operating channel of the first network of the first access point on the basis of the received information on the at least one other network.

13. Method according to claim 12, wherein the information further comprises a measured signal strength of the other network, the method further comprising:
- calculating for each operating channel the sum of the measured signal strengths of the one or more other networks operating in said channel; and
- automatically selecting the operating channel of the first network as the channel corresponding to the lowest calculated sum.

14. Method according to claim 13, wherein the information is collected from at least two wireless devices, wherein if different signal strengths are collected for the same other network, only the measurement corresponding to the largest measured signal strength is taken into account for calculating said sum.

15. A computer program product comprising non-transitory computer-executable instructions configured to, when executed, perform the steps of the method of any of the claims 12-14.
